**Europäisches Patentamt**

**European Patent Office**

**Office européen des brevets**

(19)

(11) Veröffentlichungsnummer: **0 404 988**

**A1**

(12) # EUROPÄISCHE PATENTANMELDUNG

(21) Anmeldenummer: **89111897.8**

(51) Int. Cl.⁵: **H01B 7/36**

(22) Anmeldetag: **30.06.89**

(43) Veröffentlichungstag der Anmeldung:
**02.01.91 Patentblatt 91/01**

(84) Benannte Vertragsstaaten:
**CH DE FR GB IT LI SE**

(71) Anmelder: **C.A. Weidmüller GmbH & Co.Co.**
**Postfach 950 Paderborner Strasse 175**
**D-4930 Detmold 14(DE)**

(72) Erfinder: **Wilmes, Manfred**
**Ellernbruchweg 19**
**D-4930 Detmold(DE)**
Erfinder: **Thomalla, Klaus**
**Schelpmilser Weg 90a**
**D-4800 Bielefeld 1(DE)**
Erfinder: **Schnatwinkel, Michael**
**Schmiedestrasse 39**
**D-4900 Herford(DE)**
Erfinder: **Schröder, Volker**
**Steinbergstrasse 24**
**D-4930 Detmold(DE)**
Erfinder: **Schmode, Hartmut**

**Zehlendorfer Strasse 5**
**D-4933 Blomberg(DE)**
Erfinder: **Maris, Friedrich**
**Engeweg 1**
**D-4934 Horn-Bad Meinberg 3(DE)**
Erfinder: **Pampel, Jürgen**
**Bohlenstrasse 29**
**D-4902 Bad Salzuflen 5(DE)**
Erfinder: **Hansmann, Karl-Anton**
**Feldstrasse 16**
**D-4939 Steinheim(DE)**
Erfinder: **Matthiass, Jürgen**
**Lenauweg 35**
**D-4930 Detmold(DE)**
Erfinder: **Förster, Walter**
**Eschenwaldstrasse 1**
**D-4600 Dortmund 13(DE)**

(74) Vertreter: **Stracke, Alexander, Dipl.-Ing. et al**
**Jöllenbecker Strasse 164**
**D-4800 Bielefeld 1(DE)**

(54) **Bezeichnungsträger für elektrische Leiter.**

(57) Bei diesem Bezeichnungsträger für elektrische Leiter ist bei einem hohlprofilförmigen Trägerkörper mit einem Bodenbereich (1), Seitenwänden (2) und einer oberen Bezeichnungsaufnahme (3) an den Bodenbereich (1) eine Klemmzunge(4) mit ihrem einen Ende angeformt, die sich mit ihrem freien Klemmende schräg nach innen oben auf die Bezeichnungsaufnahme (3) zu erstreckt und zwar bis etwa gegenüberliegend dem mittleren Bereich der Bezeichnungsaufnahme (3) und des weiteren mit ihrer Klemmzone gewölbt mit einer nach oben gerichteten Krümmung. Es können bei Erzielung einer guten Klemmkraft Leiter eines großen unterschiedlichen Durchmesserbereiches bequem in das Hohlprofil eingesteckt und unter Auslenkung der Klemmzunge (4) hindurchgeführt werden.

Fig. 1

EP 0 404 988 A1

# BEZEICHNUNGSTRÄGER FÜR ELEKTRISCHE LEITER

Die Erfindung betrifft einen Bezeichnungsträger für elektrische Leiter mit einem den elektrischen Leiter mit einem geschlossenen Hohlprofil umgreifenden Trägerkörper mit oberer Bezeichnungsaufnahme und einer an der Innenwand des Hohlprofiles vorgesehenen Klemmeinrichtung zur Festlegung auf Leitern unterschiedlicher Durchmesser.

Bei einem bekannten Bezeichnungsträger der gattungsgemäßen Art (DE-26 14 700 C2) besteht die Klemmeinrichtung aus zwei an den einander gegenüberliegenden seitlichen Innenwänden des Hohlprofiles des Trägerkörpers vorgesehenen, sich über die ganze Länge des Trägerkörpers erstreckenden Klemmlaschen. Aufgrund dieser Ausgestaltung stehen die beiden Klemmlaschen somit schon im Bereich der Einführungsöffnung, die der Bezeichnungsträger dem elektrischen Leiter darbietet, quer zur Einsteckrichtung des Leiters in den Bezeichnungsträger in dessen Wegbahn vor. Das Einführen des elektrischen Leiters in einen derartigen Bezeichnungsträger ist von daher schwierig. Hinzukommt, daß bei Einführung von Leitern des größeren Durchmesserbereiches die beiden Klemmlaschen weit nach außen an die Innenwand herangedrückt werden müssen, was, wenn man die Klemmlaschen auf eine gute Klemmkraft zur Erzielung eines möglichst festen Sitzes des Bezeichnungsträgers auf dem Leiter auslegt, die Montage weiterhin erheblich erschwert. Dies hat bei dem bekannten Bezeichnungsträger sogar dazu geführt, daß man für Leiter besonders großen Durchmessers eine eigenständige, abweichende Bauweise für den Bezeichnungsträger vorgesehen hat, bei dem sich im unteren Innenwandbereich zwei Klemmwände wölben, die eine Art Klemmkissen bilden. Die vorstehend genannten Probleme sind auch bei dieser Bauweise vorhanden. Hinzu kommt auch, daß insbesondere bei Leitern im größeren Durchmesserbereich, bei denen die beiden Klemmlaschen weit nach außen in Richtung Innenwand gedrückt werden, die Klemmlaschen nach der Montage den wesentlichen Teil ihrer Klemmkraftkomponente aufeinander zu richten, so daß im wesentlichen jede Klemmlasche durch die gegenüberliegende Klemmlasche nur ein relativ labiles Widerlager hat. Dies ist einer sicheren Klemmfunktion abträglich. Auch der Materialaufwand ist bei einem derartigen Bezeichnungsträger im Hinblick auf das Erfordernis zweier Klemmlaschen, die sich über die Länge des Bezeichnungsträgers erstrecken, relativ groß.

Der vorliegenden Erfindung liegt die Aufgabe zugrunde, einen Bezeichnungsträger der gattungsgemäßen Art zu schaffen, der bei sicherer Klemmlage sich bequem und einfach auf elektrische Leiter eines großen Durchmesserbereiches anbringen läßt.

Die erfindungsgemäße Lösung besteht im wesentlichen darin, daß die Klemmeinrichtung eine mit ihrem einen Ende an dem Bodenbereich des Trägerkörpers angeformte Klemmzunge ist, die sich mit ihrem freien Klemmende schräg nach innen oben auf die Bezeichnungsaufnahme zu erstreckt.

Dank dieser Ausgestaltung kann die Einführungsöffnung des Bezeichnungsträgers für den elektrischen Leiter im wesentlichen völlig frei bleiben. Der elektrische Leiter hat also in der Einsteckphase durch den hohlprofilartigen Trägerkörper bereits eine gewisse Führung, bevor er auf die schräg nach innen oben auf die Bezeichnungsaufnahme zu verlaufende Klemmzunge trifft. Diese hat darüber hinaus durch die erfindungsgemäße Anordnung in ihrem klemmend wirkenden Bereich im wesentlichen einen in Einsteckrichtung des elektrischen Leiters gerichteten Verlauf, so daß der schon eingesteckte und schon geführte elektrische Leiter die Klemmzunge bei weiterer Einsteckung selbst dann relativ leicht zurückdrängen kann, wenn diese Klemmzunge auch auf eine erhebliche Klemmkrafterzielung ausgerichtet ist. Die erfindungsgemäße Ausgestaltung vereint also eine leichte Montage mit der Möglichkeit der Erzielung einer relativ hohen, zu einem sicheren Halt führenden Klemmkraft. Dank dieser Ausgestaltung der Klemmzunge ist auch ein und derselbe Bezeichnungsträger zur Aufnahme eines besonders großen Durchmesserbereiches für die elektrischen Leiter geeignet. Eine besonders sichere Klemmung resultiert auch daraus, daß die Klemmkraft der Klemmzunge über den elektrischen Leiter immer im wesentlichen auf die obere, gegenüber den übrigen Wandbereichen steife Bezeichnungsaufnahme wirkt, hier also ein besonders formstabiles Widerlager für die Klemmkraft gegeben ist.

Durch das Vorhandensein nur einer Klemmzunge wird gegenüber den bekannten Bezeichnungsträgern auch an Material gespart, was im Hinblick auf den Massenteilcharakter derartiger Bezeichnungsträger zu einer erheblichen Verbilligung führt.

Weitere bevorzugte Ausgestaltungen, die Weiterbildungen des aufgezeigten Bauprinzipes darstellen und die vorteilhaften genannten Effekte erhöhen, sind in den Unteransprüchen gekennzeichnet. Hervorzuheben ist eine Ausgestaltung, nach der die Klemmzunge so bemessen und an einer derartigen Stelle des Bodenbereiches angeformt ist, daß ihr freies Klemmende gegenüber dem mittleren Bereich der Bezeichnungsaufnahme liegt. Dies führt zu einer gleichmäßigen Andrückung des

Leiters an den gesamten von der Bezeichnungsaufnahme gebildeten Widerlagerbereich. Von besonderem Vorteil ist es dabei auch, daß die Klemmzunge in ihrem freien Klemmbereich nach oben gekrümmt ausgebildet ist. Dies führt im Ergebnis dazu, daß sich die Klemmzone bei Leitern unterschiedlichen Durchmessers, insbesondere auch bei Leitern großen Durchmessers, nicht wesentlich aus dem mittleren Bereich gegenüber der Bezeichnungsaufnahme verlagert. Prismatische Ausgestaltungen der Klemmzunge zumindest im Bereich ihres Klemmendes, gegebenenfalls auch der Unterseite der Bezeichnungsaufnahme tragen zur Verbesserung der Klemmwirkung ebenfalls bei. Besonders zweckmäßig ist auch eine Ausgestaltung mit verkürztem Bodenbereich, gegebenenfalls einschließlich der unteren Seitenwandbereiche, so daß die Klemmzunge dann einfach an das Ende dieses verkürzten Bodenbereiches angeformt wird. Dies ist herstellungsmäßig günstig und führt in besonderem Maße zu einer erheblichen Materialeinsparung.

Bevorzugte Ausführungsbeispiele von Bezeichnungsträgern gemäß der Erfindung werden nachstehend unter Bezugnahme auf die beigefügte Zeichnung näher beschrieben.

Es zeigen

Figur 1 ein erstes Ausführungsbeispiel eines Bezeichnungsträgers gemäß der Erfindung in Perspektive,

Figur 2 den Bezeichnungsträger nach Figur 1 im Längsschnitt,

Figur 3 eine Darstellung entsprechend Figur 2 mit Illustration der Klemmung des kleinsten Leiters,

Figur 4 eine Darstellung entsprechend Figur 2 mit Illustration der Klemmung des größten Leiters,

Figur 5 einen Querschnitt durch eine weitere Ausführungsform eines Bezeichnungsträgers gemäß der Erfindung mit veränderter Anformzone der Klemmzunge und einer Querschnittsverstärkung im Bodenbereich,

Figur 6 eine weitere Ausführungsform eines Bezeichnungsträgers gemäß der Erfindung in teilweise geschnittener Perspektive,

Figuren 7 und 8 weitere Ausführungsformen bezüglich einer möglichen Klemmzungengestaltung,

Figur 9 eine weitere Ausführungsform eines Bezeichnungsträgers gemäß der Erfindung mit Illustration seiner Montageweise,

Figur 10 einen schematisierten Querschnitt durch den Bezeichnungsträger nach Figur 9 nach Montage auf einem kleinen Leiter,

Figur 11 einen Querschnitt durch den Bezeichnungsträger nach Figur 9 nach Montage auf einem Leiter eines sehr großen Durchmessers.

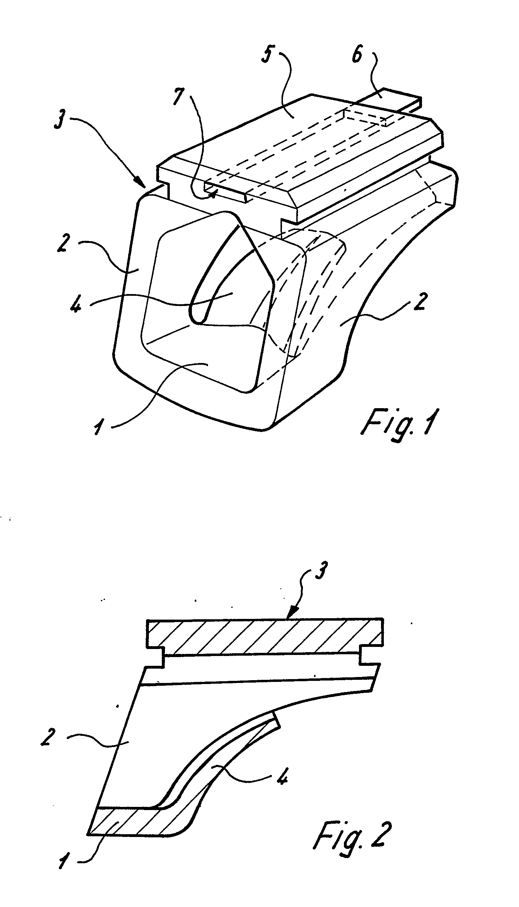

Der in den Figuren 1 bis 4 illustrierte Bezeichnungsträger besteht in seinem grundsätzlichen Aufbau aus einem Trägerkörper in Form eines geschlossenen Hohlprofiles, bestehend aus einem Bodenbereich 1, Seitenwandungen 2 sowie einer oberen Bezeichnungsaufnahme 3. An den Bodenbereich 1 ist im Ausführungsbeispiel nach den Figuren 1 bis 4 an den hinteren Endbereich des Bodens 1 mit ihrem einen Ende eine Klemmzunge 4 angeformt, die sich mit ihrem freien Klemmende schräg nach innen oben auf die Bezeichnungsaufnahme 3 zu erstreckt. In zweckmäßiger Ausgestaltung ist dabei der Bodenbereich 1 im Verhältnis zur oberen Bezeichnungsaufnahme 3, gesehen in Längserstreckung des Bezeichnungsträgers, verkürzt. Zweckmäßig hat dabei auch die Frontfläche des Bezeichnungsträgers, die aufgrund der Hohlprofilausgestaltung die Einstecköffnung für den elektrischen Leiter definiert, einen leichten Schrägverlauf dergestalt, daß der Bodenbereich 1, wie insbesondere Figur 2 zeigt, leicht nach vorn gegenüber der oberen Bezeichnungsaufnahme 3 vorspringt.

Dank dieser Ausgestaltung und infolge einer entsprechenden Bemessung der Klemmzunge 4 liegt deren im Bereich des freien Endes befindliche Klemmzone im wesentlichen etwa in dem mittleren Bereich der Bezeichnungsaufnahme 3 gegenüber. Dies führt zu einer gleichmäßigen Andrückung eines eingesteckten Leiters an die Unterseite der Bezeichnungsaufnahme 3 im wesentlichen über deren ganze Länge. Wie die Figuren zeigen, ist des weiteren in zweckmäßiger Ausgestaltung die Klemmzunge 4 im Bereich ihres freien Klemmendes nach oben gekrümmt ausgebildet. Die Klemmzone ist also bogenförmig und kontaktiert von daher

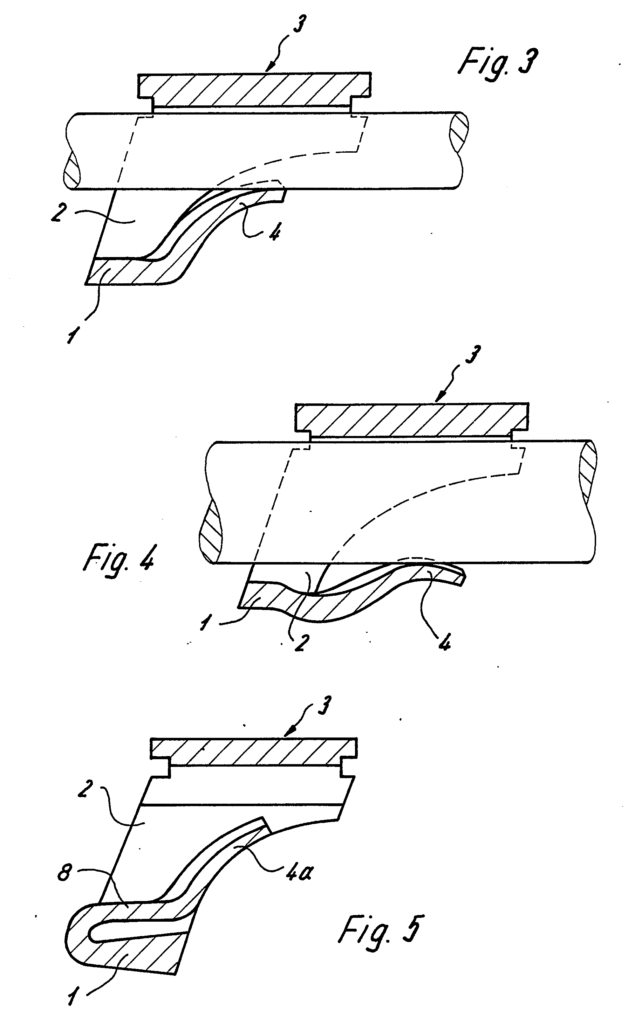

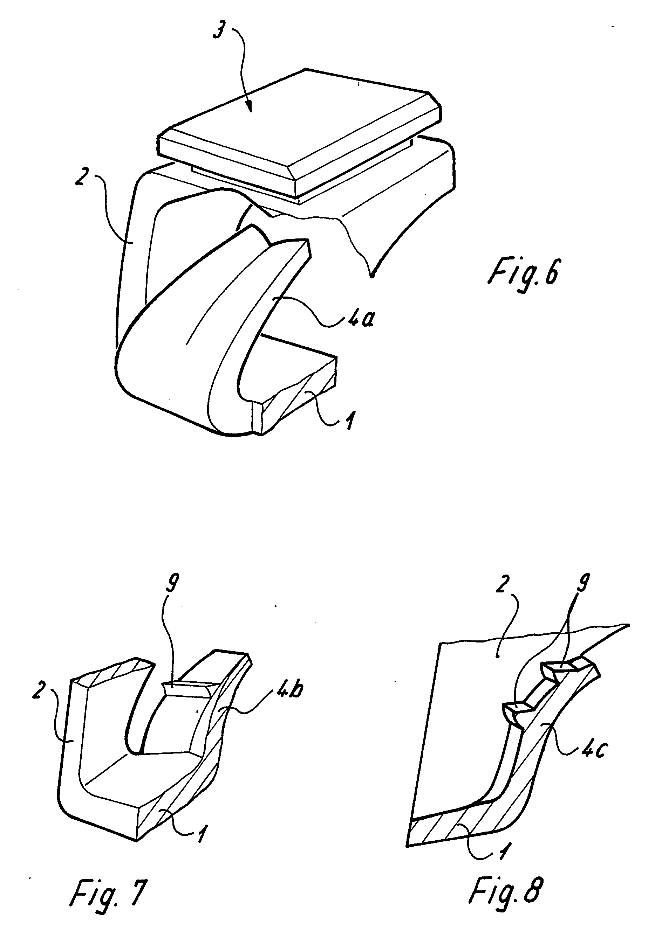

Leiter unterschiedlich großen Durchmessers an unterschiedlichen Klemmzonenstellen, und zwar insbesondere derart, daß sich die genannte Klemmzone am freien Ende der Klemmzunge 4 auch bei einem Leiter großen Durchmessers praktisch nicht aus dem mittleren Bereich im Verhältnis zur Bezeichnungsaufnahme 3 entfernt. Dies ist mit den Figuren 3 und 4 illustriert, wobei Figur 3 die Klemmung auf dem im vorgesehenen Durchmesserbereich kleinsten Leiter und Figur 4 die Klemmung auf dem im Durchmesserbereich vorgesehenen größten Leiter illustriert.

Wie aus den Figuren ersichtlich, hat die Klemmzunge 4 zumindest im Bereich ihres freien Klemmendes einen leicht prismatischen Querschnitt. Auch die Unterseite der Bezeichnungsaufnahme 3 hat zweckmäßig eine prismatische Form. Hieraus resultiert eine sehr gute Anpassung an den elektrischen Leiter und damit eine Verbesserung der Klemmwirkung. Die Prismengeometrie kann variieren, je nachdem, für welche Durchmesserbereiche von elektrischen Leitern der Bezeichnungsträger vorgesehen wird.

Die obere Bezeichnungsaufnahme 3 besteht im wesentlichen aus einem Tragstück 5 mit T-förmigem Querschnitt, das entweder unmittelbar selbst mit den eigentlichen Bezeichnungen bedruckt ist, oder auf das aufgrund der T-Konfiguration des Querschnittes übliche Bezeichnungsschildchen aufgerastet werden können. Auf jeden Fall führt diese Ausgestaltung der Bezeichnungsaufnahme mit dem Tragstück 5 zu einer Stabilisierung und Versteifung der gesamten oberen Begrenzung des Trägerkörpers derart, daß die Bezeichnungsaufnahme 3 ein stabiles steifes Widerlager für die Klemmzunge 4 bildet, was zur Erhöhung der Klemmfunktion beiträgt.

Im Normalfall wird auf einem elektrischen Leiter eine Vielzahl derartiger Bezeichnungsträger aneinander angereiht angeordnet. Um dem Gesamtverbund der Anreihung derartiger Bezeichnungsträger einen guten Halt zu geben, ist es zweckmäßig, die einzelnen Bezeichnungsträgerkörper einer solchen Anreihung auch untereinander zu verrasten. In zweckmäßiger Ausgestaltung kann hierzu beispielsweise jedes Tragstück 5 der oberen Bezeichnungsaufnahme 3 auf der einen Stirnfläche eine Rastzunge 6 und entsprechend auf der anderen Stirnfläche eine Rastaufnahme 7 für die Aufnahme der Rastzunge 6 des angrenzenden Bezeichnungsträgers aufweisen.

Die Seitenwände 2 des Bezeichnungsträgerkörpers haben in zweckmäßiger Ausgestaltung ausgehend vom inneren Ende des verkürzten Bodenbereiches 1 einen etwa dem Schrägverlauf der Klemmzunge 4 entsprechenden nach oben gerichteten Schrägverlauf, was beträchtlich zur Materialeinsparung beiträgt.

Bei dem in Figur 5 dargestellten Bezeichnungsträger ist bei grundsätzlich gleichem Aufbau die Klemmzunge 4a über eine mittlere Abstützzone 8 an das nach außen weisende Ende des Bodenbereiches 1 angeformt, was zu einer Verlängerung des Federweges führt. In dieser Ausführungsform ist auch illustriert, daß der Bodenbereich 1 ausgehend von der Anformung der Klemmzunge 4a im Querschnitt verstärkt ausgebildet sein kann, was bewirkt, daß der Bodenbereich 1 selbst möglichst wenig mitfedert und von daher die Klemmwirkung der Klemmzunge 4 nicht beeinflußt. In Figur 6 ist illustriert, daß man die Klemmzunge 4 ohne weiteres auch ohne eine derartige mittlere Abstützzone 8 an das außen liegende Ende des Bodenbereiches 1 anformen kann.

In den Figuren 7 und 8 ist illustriert, daß man Klemmzungen 4b und 4c vorsehen kann, denen man im Bereich ihrer Klemmzone, sei es mit oder ohne Beibehalt des prismatischen Querschnittes der Klemmzunge, einen Klemmzahn 8 (Figur 7) oder in Art einer Verzahnung mehrere Klemmzähne 8 (Figur 8) zuordnen kann.

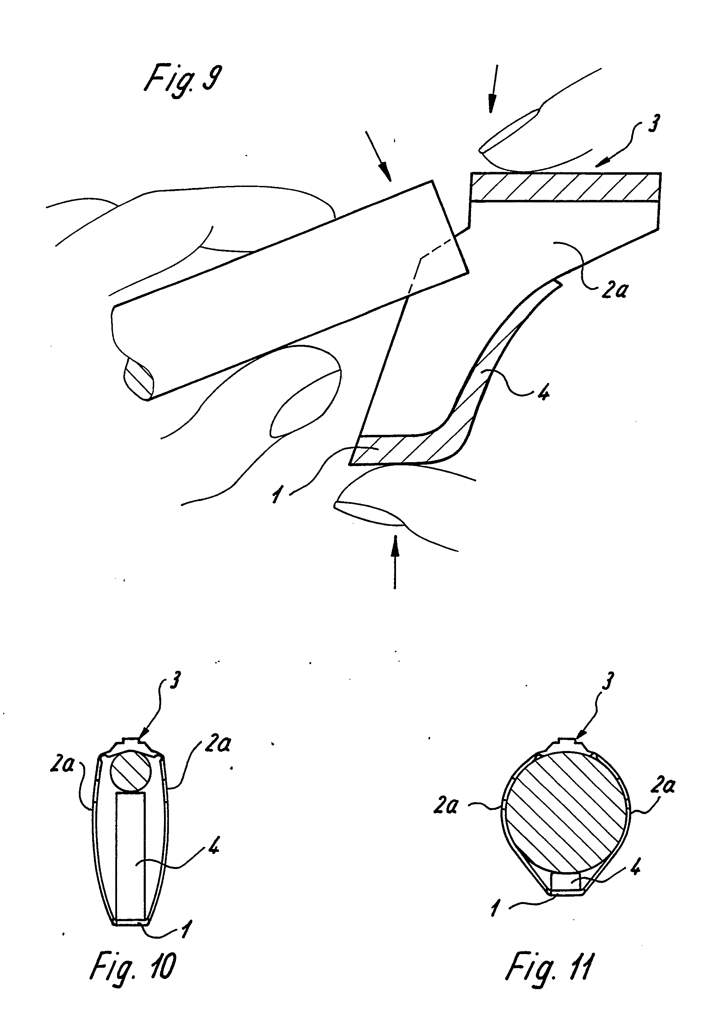

In den Figuren 9 bis 11 ist ein Bezeichnungsträger gemäß der Erfindung illustriert, der bei grundsätzlich gleichem Aufbau für die Montage auf Leitern eines Durchmesserbereiches ausgelegt ist, der auch elektrische Leiter besonders großen Durchmessers einschließt. Zu diesem Zweck sind bei der naturgemäß erforderlich relativ großen Bauhöhe des Bezeichnungsträgers (Figuren 10 und 11) besonders flexible Seitenwände 2a vorgesehen, die sich bei Beanspruchung nach außen verformen können. Elektrische Leiter kleinen und mittleren Durchmessers können normal axial von vorne eingesteckt werden. Die Klemmung erfolgt grundsätzlich wie bisher zwischen der Klemmzone der Klemmzunge 4 und der Unterseite der Bezeichnungsaufnahme 3. Leiter sehr großen Querschnittes werden, wie in Figur 9 illustriert, zunächst von oben eingeschoben, wobei die relativ flexiblen Seitenwände 2a aufgeweitet werden. Hierdurch wird gleichzeitig die Klemmzunge 4 in die erforderliche Klemmposition gedrückt. Die Seitenwände 2a legen sich nach der Montage aufgeweitet um den Außenmantel des elektrischen Leiters, wie in Figur 11 illustriert.

## Ansprüche

1. Bezeichnungsträger für elektrische Leiter mit einem den elektrischen Leiter mit einem geschlossenen Hohlprofil umgreifenden Trägerkörper mit einem Bodenbereich (1), Seitenwänden (2) und einer oberen Bezeichnungsaufnahme (3) und einer an der Innenwand des Hohlprofiles vorgesehenen Klemmeinrichtung (4) zur Festlegung auf Leitern unterschiedlichen Durchmessers, **dadurch gekennzeichnet**, daß die Klemmeinrichtung eine mit ihrem einen Ende an dem Bodenbereich (1) des Trägerkörpers angeformte Klemmzunge (4, 4a, 4b, 4c) ist, die sich mit ihrem freien Klemmende schräg nach innen oben auf die obere Bezeichnungsaufnahme (3) zu erstreckt.

2. Bezeichnungsträger nach Anspruch 1, dadurch gekennzeichnet, daß die Klemmzunge (4, 4a, 4b, 4c) in ihrer Länge so bemessen und derart am Bodenbereich (1) angeformt ist, daß ihr freies Klemmende im wesentlichen dem mittleren Bereich der oberen Bezeichnungsaufnahme (3) gegenüberliegt.

3. Bezeichnungsträger nach Anspruch 1 oder 2, dadurch gekennzeichnet, daß die Klemmzunge (4, 4a, 4b, 4c) zumindest im Bereich ihrer Klemmzone durch eine nach oben gerichtete Krümmung bogenförmig ausgebildet ist.

4. Bezeichnungsträger nach einem oder mehreren der vorhergehenden Ansprüche, dadurch gekennzeichnet, daß der Bodenbereich (1) im Verhältnis zur oberen Bezeichnungsaufnahme (3) verkürzt ist.

5. Bezeichnungsträger nach einem oder mehreren der vorhergehenden Ansprüche, dadurch gekennzeichnet, daß der Bodenbereich (1) auf der Leitereinsteckseite nach vorne über die obere Bezeichnungsaufnahme (3) vorspringt.

6. Bezeichnungsträger nach einem oder mehreren der vorhergehenden Ansprüche, dadurch gekennzeichnet, daß die Klemmzunge (4, 4b, 4c) am hinteren inneren Ende des Bodenbereiches (1) angeformt ist.

7. Bezeichnungsträger nach einem oder mehreren der Ansprüche 1 bis 5, dadurch gekennzeichnet, daß die Klemmzunge (4a) am außen liegenden Ende des Bodenbereiches (1) angeformt ist.

8. Bezeichnungsträger nach Anspruch 7, dadurch gekennzeichnet, daß die Klemmzunge (4a) über eine mittlere Abstützzone (8) an dem außen liegenden Ende des Bodenbereiches (1) angeformt ist.

9. Bezeichnungsträger nach einem oder mehreren der vorhergehenden Ansprüche, dadurch gekennzeichnet, daß die Klemmzunge (4, 4a, 4b, 4c) zumindest im Bereich ihrer Klemmzone einen prismatischen Querschnitt aufweist.

10. Bezeichnungsträger nach einem oder mehreren der vorhergehenden Ansprüche, dadurch gekennzeichnet, daß die als Widerlager für den elektrischen Leiter dienende Unterseite der Bezeichnungsaufnahme (3) prismatisch ausgebildet ist.

11. Bezeichnungsträger nach einem oder mehreren der vorhergehenden Ansprüche, dadurch gekennzeichnet, daß die Seitenwände (2, 2a) des Trägerkörpers ausgehend vom inneren Ende des verkürzten Bodenbereiches (1) einen etwa dem Schrägverlauf der Klemmzunge (4, 4a, 4b, 4c) entsprechenden nach oben gerichteten Schrägverlauf haben.

12. Bezeichnungsträger nach einem oder mehreren der vorhergehenden Ansprüche, dadurch gekennzeichnet, daß an der oberen Bezeichnungsaufnahme (3) an der einen Stirnfläche ein Rastvorsprung (6) und in der anderen Stirnfläche eine entsprechende Rastaufnahme (7) vorgesehen sind.

13. Bezeichnungsträger nach einem oder mehreren der vorhergehenden Ansprüche, dadurch gekennzeichnet, daß auf der Klemmzunge (4b, 4c) im Bereich ihrer Klemmzone ein oder mehrere Klemmzähne (9) angeordnet sind.

14. Bezeichnungsträger nach einem oder mehreren der vorhergehenden Ansprüche, dadurch gekennzeichnet, daß zur Aufnahme elektrischer Leiter eines großen Durchmessers der Trägerkörper bei entsprechende Bauhöhe relativ flexible Seitenwände (2a) aufweist.

Fig. 1

Fig. 2

Weidmüller

Fig. 3

2

1

4

Fig. 4

3

1

2

4

3

2

8

4a

Fig. 5

1

Fig.6

Fig.7

Fig.8

Weidmüller

*Fig. 9*

*Fig. 10*

*Fig. 11*

| Europäisches Patentamt | EUROPÄISCHER RECHERCHENBERICHT | Nummer der Anmeldung |
|---|---|---|
| | | EP 89 11 1897 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | CH-A-474129 (WOERTZ)<br>* Spalte 2, Zeile 28 - Spalte 3, Zeile 62; Figuren 1-3 *<br>--- | 1, 3, 6, 10 | H01B7/36 |
| A,D | DE-A-2614700 (FEHR)<br>* Seite 4, Zeile 15 - Seite 6, Zeile 7; Figuren 1-3 *<br>----- | 1 | |

| | | | RECHERCHIERTE SACHGEBIETE (Int. Cl.5) |
|---|---|---|---|
| | | | H01B |

Der vorliegende Recherchenbericht wurde für alle Patentansprüche erstellt

| Recherchenort | Abschlußdatum der Recherche | Prüfer |
|---|---|---|
| DEN HAAG | 16 FEBRUAR 1990 | DEMOLDER J. |

EPO FORM 1503 03.82 (P0403)

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
..........................................................................
& : Mitglied der gleichen Patentfamilie, übereinstimmendes Dokument